# EUROPÄISCHE PATENTANMELDUNG

(11) **EP 2 206 658 A1**
(43) Veröffentlichungstag der Anmeldung: **14.07.2010**
(21) Anmeldenummer: 10150559.2
(22) Anmeldetag: 12.01.2010
(51) Int. Cl.: B65D 77/20, B65D 1/36, B65D 25/54, B65D 65/46

(54) **Verpackung**

(30) Priorität: 13.01.2009 DE 102009004817
(71) Anmelder: Huhtamäki Oyj, 02150 Espoo (FI)
(72) Erfinder: Lahtela, Juhani, 12400, Tervakoski (FI); Vapola, Risto, 02130, Espoo (FI)
(74) Vertreter: Hutzelmann, Gerhard

(57) **Zusammenfassung**

Verpackung aus einem Papier-, Karton- oder Faser-Unterteil (1) mit ein oder mehreren Abteilen (4) beliebiger Form, wobei die Ecken (9) der Abteile (4) eine abgerundete Form aufweisen und die Abteile (4) von einem Rand (7) wenigstens überwiegend umfasst werden, wobei das Unterteil (1) tiefgedrückt oder tiefgezogen sein kann und eine Kunststoffbeschichtung (3) aufweisen kann, wobei das Unterteil (1) mit einem Deckel (11) verschlossen und so die Verpackung gebildet ist und daß der Deckel (11) aus einer Kunststofflage oder einem Papier, Karton oder einer Faserlage gebildet ist, wobei das Papier, der Karton oder die Faserlage mit einer Kunststofflage ausgerüstet ist.

## Beschreibung

Die Erfindung bezieht sich auf eine Verpackung aus einem Papier-, Karton oder Faser-Unterteil mit ein oder mehreren Abteilen beliebiger Form, wobei die Ecken der Abteile eine abgerundete Form aufweisen und die Abteile von einem Rand wenigstens überwiegend umfasst werden, wobei das Unterteil tiefgedrückt oder tiefgezogen sein kann und eine Kunststoffbeschichtung aufweisen kann.

Es sind verschiedene derartige Verpackungen bekannt, die jedoch den Nachteil aufweisen, daß diese entweder einen großen Kunststoffanteil aufweisen, nicht gasdicht sind, oder aber nicht backofen- oder mikrowellentauglich sind, wie es aber gerade bei Fertigessen notwendig ist.

Zudem ist es bei bekannten Verpackungen dieser Art notwendig, einen zusätzlichen aus Karton bestehenden Außenmantel vorzusehen, der nicht nur zusätzlichen Materialeinsatz bedingt, sondern auch zusätzliche Handhabung.

Daher liegt der Erfindung die Aufgabe zugrunde, eine Verpackung der eingangs genannten Art zu schaffen, die nicht nur die vorgenannten Probleme löst, sondern zudem auch noch umweltfreundlich ist.

Diese Aufgabe wird erfindungsgemäß dadurch gelöst, daß das Unterteil mit einem Deckel verschlossen und so die Verpackung gebildet ist und daß der Deckel aus einer Kunststofflage oder einem Papier, Karton oder einer Faserlage gebildet ist, wobei das Papier, der Karton oder die Faserlage mit einer Kunststofflage ausgerüstet ist.

Dadurch wird eine Verpackung geschaffen, die nicht nur dicht verschlossen werden kann, sondern die auch einen geringen Kunststoffanteil aufweist. Zusätzlich wird bei vergleichbarer Stabilität und Festigkeit der Verpackung Material eingespart. Der Einsatz eines zusätzlichen Außenmantels ist nicht mehr notwendig.

Sehr vorteilhaft ist es erfindungsgemäß auch, wenn das Unterteil aus Polymeren, PE, PET, PA, PP, Dispersion Plastics und/oder biologisch abbaubaren und/oder nachwachsenden Stoffen, wie PLA, Papier, Pappe, Pressfasern, Faserguß-, Faserform-Materialien alleine oder in Kombination besteht oder diese Materialien aufweist.

Ebenfalls als sehr vorteilhaft hat es sich erwiesen, wenn das Oberteil aus Polymeren, PE, PET, PA, PP, Dispersion Plastics und/oder biologisch abbaubaren und/oder nachwachsenden Stoffen, wie PLA, Papier, Pappe, Pressfasern, Faserguß-, Faserform-Materialien alleine oder in Kombination besteht oder diese Materialien aufweist.

Durch derartige Ausgestaltungen lassen sich sowohl umweltfreundliche als auch stabile Unterteile und Oberteile herstellen.

Dabei hat es sich als sehr vorteilhaft erwiesen, wenn das Unterteil eine Kunststofflage aus Polymeren, PE, PET, PA, PP, Dispersion Plastics und/oder biologisch abbaubaren und/oder aus nachwachsenden Rohstoffen hergestellten Kunststoffen, wie PLA aufweist oder aus diesen Materialien besteht.

Ebenfalls sehr vorteilhaft ist es, wenn der Deckel eine Kunststofflage aus Polymeren, PE, PET, PA, PP und/oder biologisch abbaubaren und/oder aus nachwachsenden Rohstoffen hergestellten Kunststoffen, wie PLA aufweist oder aus diesen Materialien besteht.

Durch den Einsatz dieser Materialien für die Kunststofflage wurden sehr gute Ergebnisse erzielt.

Eine weitere sehr vorteilhafte Ausgestaltung der Erfindung liegt auch vor, wenn die Kunststofflage mehrschichtig ausgebildet ist.

Damit können die Eigenschaften mehrerer Kunststoffe miteinander kombiniert werden und diese zu einer einzigen Kunststofflage zusammengeführt werden.

Ebenfalls sehr vorteilhaft ist es erfindungsgemäß, wenn zwischen Kunststofflage und Papier, Karton oder Faserlage und/oder zwischen Unterteil und Deckel eine Zwischenschicht vorgesehen ist, die als Haftvermittler, Kleber und/oder als Delaminationshilfe ausgestaltet sein kann.

Hierdurch wird eine gute Verbindung zwischen Papier und Kunststofflage, aber auch zwischen Unterteil und Deckel hergestellt, die jedoch bei Bedarf auch wieder getrennt werden kann.

Eine sehr vorteilhafte Weiterbildung der Erfindung liegt auch dann vor, wenn eine Kleberschicht zwischen Kunststofflage und Papier, Karton oder Faserlage und/oder zwischen Unterteil und Deckel vorgesehen ist.

Dadurch lassen sich Kunststofflage und Papier, Karton oder Faserlage, aber auch Unterteil und Deckel auf einfache Art und Weise miteinander verbinden.

Dabei ist es sehr vorteilhaft, wenn als Kleberschicht ein Kleber auf Wasserbasis, Lösungsmittelbasis, lösungsmittelfreier Basis oder Biobasis vorgesehen ist.

Hiermit können verschiedenste Verwendungen realisiert werden.

Eine weitere erfindungsgemäß sehr vorteilhafte Ausgestaltung der Erfindung liegt auch vor, wenn die Kleberschicht als Haftvermittler, Delaminationshilfe und/oder Siegelschicht ausgebildet ist.

Damit ist eine sehr flexible Ausgestaltung möglich.

Eine weitere sehr vorteilhafte Ausgestaltung in diesem Zusammenhang besteht auch darin, daß wasserbasierende Kleber auf Vinylbasis, Acrylbasis, Polyamidbasis, Polyesterbasis, Kautschukbasis, Gummibasis, Polyurethanbasis, Stärkebasis, Caseinbasis, Ligninbasis und/oder Polyvinylalkoholbasis, und/oder lösungsmittelbasierende Kleber auf Vinylbasis, Acrylbasis, Polyamidbasis, Polyesterbasis, Kautschukbasis, Gummibasis, Polyurethanbasis, Nitrocellulosebasis, Zelluloseacetatbasis und/oder Polyisobutylenbasis, und/oder lösungsmittelfreie Kleber auf Vinylbasis, Acrylbasis, Polyamidbasis, Polyesterbasis, Kautschukbasis, Gummibasis, Polyurethanbasis, Nitrocellulosebasis, Zelluloseacetatbasis und/oder Polyisobutylenbasis, und/oder biologische Kleber auf Stärkebasis, Dextrinbasis, Ligninbasis, Caseinbasis, Basis natürlichem Kautschuk, Gelatinebasis, Nitrocellulosebasis, Zelluloseacetatbasis, PLA-Basis und/oder auf Basis anderer nachwachsender und/oder biologisch abbaubarer Stoffe vorgesehen sind.

Mit diesen Klebervarianten wurden beste Ergebnisse erzielt.

Ebenfalls sehr vorteilhaft ist es, wenn als Kleberschicht ein Anhydrid modifiziertes Ethylen Acrylat Copolymer, ein Anhydrid modifiziertes Ethylen Vinyl Acetat Copolymer, ein Ethylen Acrylsäure Copolymer und/oder ein Ethylen Vinyl Acetat Copolymer vorgesehen ist.

Hiermit wurden äußerst vorteilhafte Ergebnisse gerade in Bezug auf das Siegel- und Delaminationsverhalten erzielt.

Äußerst vorteilhaft ist es, wenn die Kleber mit einem Flächengewicht zwischen 1,0 und 5,0 g/m² vorgesehen sind, wobei wasserbasierende Kleber mit einem Flächengewicht zwischen 2,0 und 5,0 g/m², insbesondere zwischen 3,0 und 3,5 g/m² und lösungsmittelbasierende Kleber zwischen 2,0 und 5,0 g/m², insbesondere zwischen 3,5 und 4,0 g/m² und lösungsmittelfreie Kleber zwischen 1,0 und 4,0 g/m², insbesondere zwischen 1,8 und 2,5 g/m² vorgesehen sind.

Bei diesen Auftragsgewichten wird eine ausreichende Haftung erzielt, ohne jedoch Klebstoff zu verschwenden.

Gemäß einer Weiterbildung der Erfindung ist es auch sehr vorteilhaft, wenn der Deckel ein oder mehrere Sichtfenster aufweist und innerhalb dieser Sichtfenster wenigstens weitgehend transparent ausgebildet ist.

Damit wird eine gute Sichtbarkeit des Füllgutes ermöglicht.

Sehr vorteilhaft ist es dabei auch, wenn der Deckel ausserhalb der Sichtfenster opak ausgebildet ist.

Damit wird sichergestellt, daß die nicht sichtbar zu machenden Bereiche abgedeckt sind.

Eine weitere sehr vorteilhafte Ausgestaltung liegt auch dann vor, wenn der Papier/Kartonteil des Folien - Papier/Karton - Verbundes im Bereich der Sichtfenster ausgespart ist.

Damit wird auf einfache Art und Weise eine Durchsichtmöglichkeit geschaffen.

Erfindungsgemäß hat es sich auch als sehr vorteilhaft erwiesen, wenn der Deckel wenigstens außerhalb der Sichtfenster mit einer Bedruckung ausgerüstet ist.

Mit der Bedruckung können Informationen, Designs oder andere Gestaltungen auf der Verpackung angebracht werden. Zudem kann durch die Bedruckung die Verpackung mit opaken Bereichen versehen werden.

Eine weitere sehr vorteilhafte Ausgestaltung der Erfindung liegt auch vor, wenn die Bedruckung ein oder zweiseitig auf dem Papier oder der Kunststofflage vorgesehen ist.

Dadurch können sehr ausführliche Informationen und/oder Gestaltungen vorgesehen werden.

Es ist denkbar, daß das Papier bzw. der Karton beidseitig bedruckt ist, wohingegen das Kunststoffmaterial nur auf der Außenseite eine Bedruckung aufweist. Dies gilt insbesondere für den Deckel.

Eine weitere sehr vorteilhafte Ausgestaltung liegt auch vor, wenn Falten in den abgerundeten Ecken des Unterteils im Bereich des umlaufenden Randes durch geschmolzenes Material der Kunststoffbeschichtung des Unterteils geglättet sind.

Hierdurch wird sichergestellt, daß das Unterteil mit dem Deckel dicht verbunden und so eine dichte Verpackung erzeugt werden kann.

Es hat sich auch als sehr vorteilhaft erwiesen, wenn der Deckel auf das Verpackungsunterteil im Bereich des Randes aufgesiegelt und/oder aufgeklebt ist.

Durch das Aufsiegeln und/oder Aufkleben wird der Deckel sicher und dicht mit dem Rand des Unterteils verbunden. Partielle Verklebungen oder Versiegelungen sind denkbar.

Eine weitere sehr vorteilhafte Fortbildung liegt auch vor, wenn zumindest die Kunststoffbeschichtung des Verpackungsuntereils aus einem gegen hohe Temperaturen beständigen Material besteht, wobei die hohen Temperaturen bis zu 250°C, vorzugsweise bis zu 220°C betragen.

Hierdurch wird der Einsatz der Verpackung unter anderem für Fertiggerichte ermöglicht, die zum Beispiel im Backofen oder auch in der Mikrowelle erwärmt werden.

Erfindungsgemäß ist es sehr vorteilhaft, wenn beim Verpackungsuntereil der Übergang zwischen Rand und Wand und/oder zwischen Wand und Boden durch einen Radius definiert ist.

Dabei hat es sich als sehr vorteilhaft erwiesen, wenn der Radius zwischen fünf und achtzig Millimeter, vorzugsweise zwischen zehn und vierzig Millimeter beträgt.

Diese Radien sorgen dafür, daß es in den Bereichen der Übergänge nicht zu Beschädigungen der Beschichtung beim Tiefziehen bzw. Tiefdrücken des Unterteils kommt.

Eine weitere sehr vorteilhafte Ausgestaltung der Erfindung liegt auch dann vor, wenn das Verpackungsunterteil und/oder das Verpackungsoberteil wenigstens teilweise bedruckt ist.

Durch eine Bedruckung können nicht nur Informationen, sondern auch Designs oder opake Bereiche angebracht werden. Es ist denkbar, daß das das Unterteil und/oder den Deckel bildende Material schon vor dem Verformen bedruckt sind.

Dabei hat es sich als sehr vorteilhaft erwiesen, wenn die Bedruckung in ebenen Bereichen der Verpackung vorgesehen ist.

Gerade in ebenen Bereichen können Informationen vorgesehen sein.

Eine weitere sehr vorteilhafte Ausgestaltung liegt auch vor, wenn der Deckel mit dem äußeren Rand des Unterteils im wesentlichen abschließt.

Sehr vorteilhaft ist es dabei aber auch, wenn wenigstens ein Teilbereich des Deckels über das Unterteil übersteht und eine Grifflasche bildet.

Durch eine derartige Ausgestaltung kann einerseits eine Sicherheitsverpackung und andererseits eine definiert öffenbare Verpackung geschaffen werden. Durch das Anbringen einer Grifflasche kann der Deckel leicht ergriffen werden und dadurch abgezogen oder abgenommen werden.

Es hat sich gemäß einer weiteren Fortbildung der Erfindung auch als sehr vorteilhaft erwiesen, wenn eine gasdichte Verbindung zwischen Deckel und Unterteil vorgesehen ist.

Damit wird es möglich, Lebensmittel zu verpacken.

Sehr vorteilhaft ist es erfindungsgemäß auch, wenn die Verbindung zwischen Unterteil und Deckel bei Raumtemperatur leicht trennbar ist.

Damit kann der Deckel leicht abgezogen werden.

Ebenfalls sehr vorteilhaft ist es, wenn die Verbindung zwischen Unterteil und Deckel nach Erhitzen der Verpackung leicht trennbar ist.

Dadurch kann beispielsweise eine Garverpackung geschaffen, bei der sich der Deckel erst entfernen lässt, wenn der Inhalt die erforderliche Temperatur erreicht hat. Dabei ist es sogar denkbar, daß die Verpackung danach sogar wieder abgekühlt sein kann und dennoch die Möglichkeit des Abziehens besteht.

Es hat sich auch als sehr vorteilhaft erwiesen, wenn die Kunststofflage des Unterteils und/oder des Deckels von der jeweiligen Kartonlage bei Raumtemperatur leicht trennbar ist.

Damit kann die Karton/Papierlage und die Kunststofflage getrennt verwertet werden.

Es hat sich dabei als sehr vorteilhaft erwiesen, wenn die Kleberschicht einen Comonomer Anteil zwischen zwanzig und vierzig Prozent aufweist.

Ebenfalls sehr vorteilhaft ist es auch, wenn die Kleberschicht eine Dicke zwischen drei und sechs Mikrometer aufweist.

Bei derartiger Ausgestaltung wurden sehr gute Ergebnisse hinsichtlich des Trennverhaltens erzielt.

Ebenfalls sehr vorteilhaft ist es erfindungsgemäß auch, wenn die Kunststofflage von der Kartonlage nach Erhitzen der Verpackung leicht trennbar ist.

Damit kann die Verpackung erst nach Verwendung auf einfach Art und Weise getrennt und entsorgt werden. Zudem kann ein Orginalitätsverschluß geschaffen werden, der ein Öffnen erst nach einer Erwärmung zulässt. Es ist denkbar, daß eine Erwärmung auf mindestens 50°C ausreichend ist.

Es hat sich erfindungsgemäß als sehr vorteilhaft erwiesen, wenn die Kleberschicht einen Comonomer Anteil zwischen fünf und zwanzig Prozent aufweist.

Ebenfalls sehr vorteilhaft ist es, wenn die Kleberschicht eine Dicke zwischen ein und vier Mikrometer aufweist.

Damit wurde eine schlechte Trennbarkeit bei Raumtemperatur und eine gute Trennbarkeit bei und nach einem einmaligen Erhitzen erzielt.

Es hat sich erfindungsgemäß auch als sehr vorteilhaft erwiesen, wenn die Kunststofflage Barriereeigenschaften gegenüber Gasen, Sauerstoff, Feuchtigkeit und anderen Medien aufweist.

Durch eine derartige Ausgestaltung wird das Füllgut vor schädlichen Umwelteinflüssen geschützt.

Eine äußerst vorteilhafte Verwendung der erfindungsgemäßen Verpackung liegt vor, wenn die Verpackung zum Verpacken von Gütern unter modifizierter Barriere verwendet wird.

Es kann beispielsweise der Sauerstoffgehalt der in der Verpackung befindlichen Luft reduziert werden, so daß das Füllgut länger haltbar ist.

Eine weitere sehr vorteilhafte Verwendung liegt auch vor, wenn die Verpackung als Transport und/oder Garverpackung für Lebensmittel verwendet wird.

Gerade sogenannte Menüschalen, die bislang aus Kunststoff gefertigt wurden, können mit der vorliegenden Erfindung durch umweltfreundliche Materialien ersetzt werden. Der Einsatz von Kunststoff wird weitgehend minimiert und kann auch noch durch nachwachsende und/oder biologisch abbaubare Polymere ersetzt werden.

Im folgenden wird die Erfindung anhand mehrerer Ausführungsbeispiele veranschaulicht.

### Dabei zeigen:

- Fig. 1: eine Darstellung eines kunststoffbeschichteten Papieruntereils mit abgerundeten Ecken, deren Falten geglättet sind und das mit einem aufgesiegelten Folien/Papier-Verbund verschlossen ist, der ein Sichtfenster aufweist,

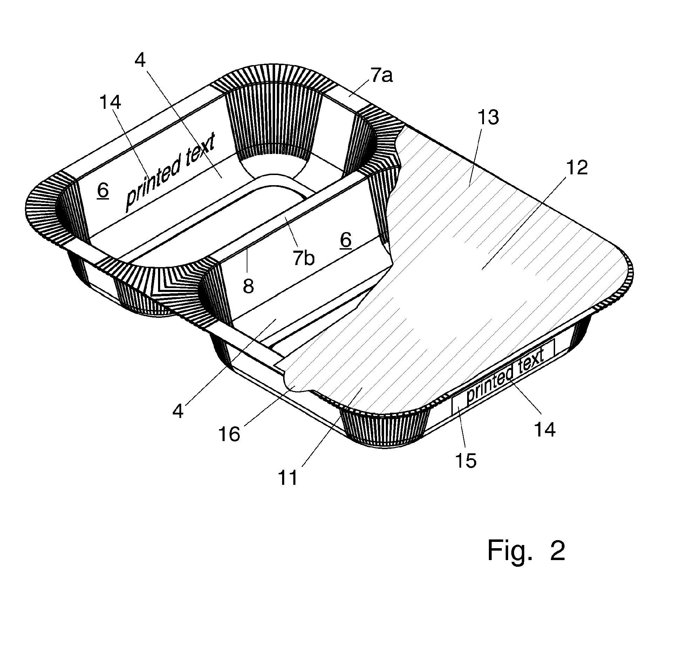

- Fig. 2: eine Darstellung einer weiteren Verpackung, die mit einer bedruckten Folie verschlossen ist und durch die Bedruckung ein Sichtfenster definiert ist,

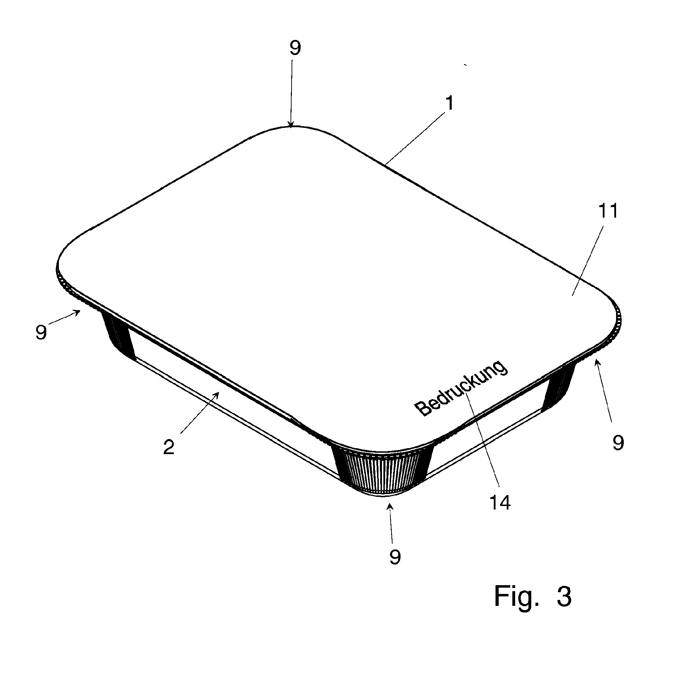

- Fig. 3: eine Darstellung einer geschlossenen Verpackung ohne Sichtfenster,

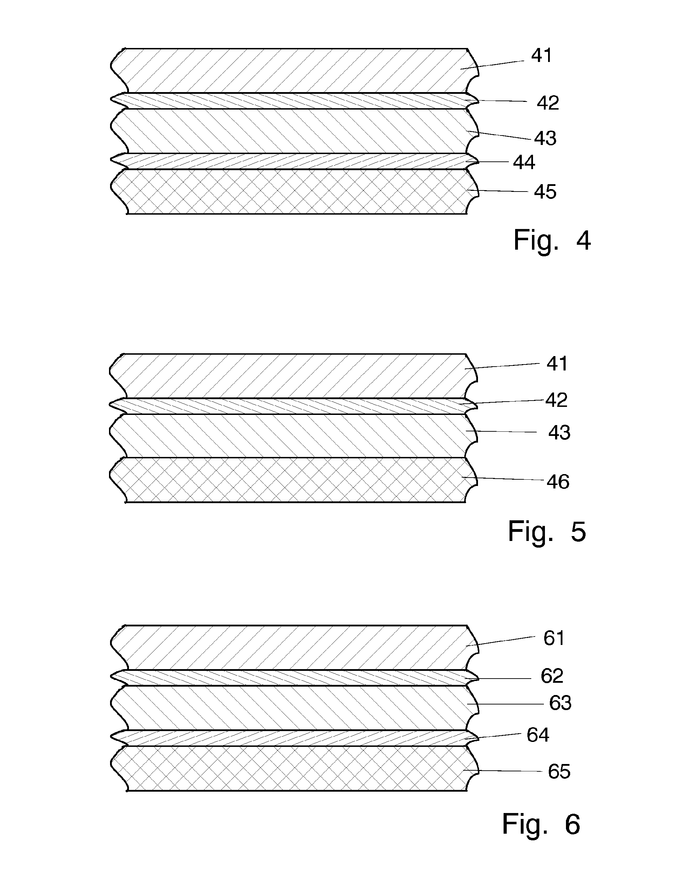

- Fig. 4: einen Schnitt durch einen erfindungsgemäßen Karton/Folienverbund bzw. Papier/Folienverbund, der bei Raumtemperatur trennbar ist,
- Fig. 5: einen Schnitt durch einen weiteren erfindungsgemäßen Karton/Folienverbund, bzw. Papier/Folienverbund, der bei Raumtemperatur trennbar ist,
- Fig. 6: einen Schnitt durch einen erfindungsgemäßen Karton/Folienverbund bzw. Papier/Folienverbund, der bei bzw. nach Erwärmung trennbar ist und eine Beschichtung aufweist, und
- Fig. 7: einen Schnitt durch einen weiteren bei bzw. nach Erwärmung trennbaren Verbund.

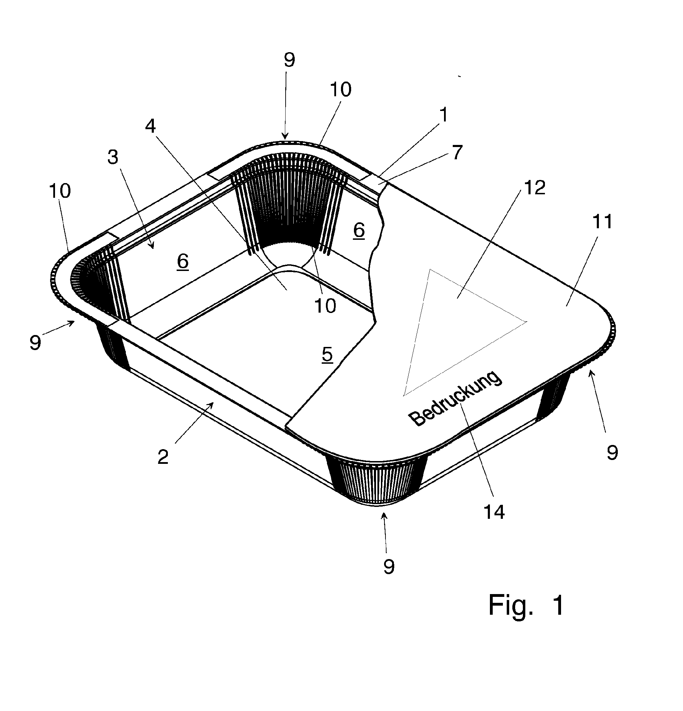

Mit 1 ist in Fig. 1 ein als Schale ausgebildetes Verpackungsunterteil bezeichnet, das aus einem tiefgedrückten bzw. tiefgezogenen, mit Kunststoff beschichteten Karton 2 oder Papier gebildet ist. Die Kunststoffbeschichtung 3 ist zumindest auf der Innenseite der Schale 1 vorgesehen. Die Schale 1 kann ein oder mehrere Abteile 4 aufweisen. An den Boden 5 der Schale 1 schließen Seitenwände 6 an. Am vom Boden 5 abgekehrten Ende der Seitenwände ist ein die Schale 1 umschließender Rand 7 vorgesehen, der auch zwischen zwei benachbarten Abteilen 4 verlaufen kann. Die unterschiedlichen Abschnitte des Randes 7 sind mit 7a und 7b bezeichnet.

Die Abteile 4 sind voneinander durch einen Steg 8 getrennt.

Die Ecken 9 der Schale 1 und der Abteile 4 sind abgerundet ausgebildet. In diesen Bereichen treten beim Umformen eines flachliegenden Kartonzuschnitts Falten 10 auf, die dadurch bedingt sind, daß im Eckbereich mehr Material vorhanden ist, als im Randbereich. Die Falten 10 können beispielsweise durch aufschmelzen der Kunststoffbeschichtung 3 geglättet werden, so daß zumindest im Bereich des Randes 7 eine glatte Fläche zur Verfügung steht, auf die ein Deckel 11 dicht aufgesiegelt oder aufgeklebt werden kann.

Der Deckel 11 ist aus einem Folien-Papier/Karton-Verbund gefertigt, wobei die Folienschicht der Schale 1 zugewandt ist. Es ist aber auch denkbar, daß für den Deckel 11 nur eine ein- oder mehrlagige Folie eingesetzt wird.

Der Deckel 11 kann mit einem Sichtfenster 12 versehen sein, welches einen Blick auf das Füllgut ermöglicht.

Bei einem Folien-Papier/Karton-Verbund ist das Sichtfenster durch eine Aussparung in der Papier/Karton-Lage gebildet. Die Folien-Lage ist transparent ausgeführt.
Bei einer ein- oder mehrschichtigen Deckelfolie ohne weitere Papier oder Kartonlage kann das Sichtfenster 12 entweder durch gezielte Mattierungen oder aber auch durch eine Bedruckung 13 vorgesehen werden.

Auf der Schale 1 und auch auf dem Deckel 11 können Bedruckungen 14 vorgesehen sein, die bereits vor dem Verformen der Schale 1 auf einen flach liegenden Zuschnitt aufgebracht werden können.

Die Bedruckungen 13 und 14 können neben dekorativen Elementen auch Informationen enthalten und so den Einsatz eines zusätzlichen Mantels, der die gesamte Verpackung umhüllt, überflüssig machen.

Vielmehr werden alle nötigen Informationen direkt auf der Verpackung angebracht.

Die Bedruckungen 13 und 14 können durch einen Überlack 15 gegen Abrieb und Beschädigungen geschützt werden.

Das Sichtfenster 12 kann eine beliebige Form aufweisen. In den Figuren sind beispielhaft rechteckige und dreieckige Sichtfenster 12 dargestellt.

Wird auf der Außenseite der Schale 1 ein Überlack 15 vorgesehen, so schützt dieser den Karton auch gegenüber Feuchtigkeit und Flüssigkeiten.

Es ist aber auch denkbar, daß die Bedruckungen 13 und 14 wenigstens teilweise auf den Innenseiten vorgesehen werden. Diese werden dann wieder von einem Überlack 15 abgedeckt, damit kein direkter Kontakt zwischen den Druckfarben der Bedruckungen 13 und 14 und dem Füllgut zustande kommt.

Die Bedruckungen 13 und 14 können beispielsweise als Mehrfarb-Flexodruck aufgebracht sein.

Die Kunststoffbeschichtung 3 kann auf den Karton extrusionsbeschichtet sein. Es ist aber auch denkbar, daß die beiden Schichten miteinander laminiert oder kaschiert sind.

Der Deckel 11 ist vorzugsweise laminiert oder kaschiert. Es ist aber auch denkbar, daß die Folienschicht als Extrusionsbeschichtung aufgebracht ist.

Die Übergänge im Schalenteil 1 zwischen Boden 5 und Seitenwänden 6 sind mit einem Radius versehen, der beispielsweise zwischen zehn und vierzig Millimeter beträgt. Durch diesen Radius werden vor allem punktuelle Beschädigungen in der Kunststoffbeschichtung beim Tiefziehen bzw. Tiefdrücken der Schale 1 im Bereich der Überhänge vermieden, die bei übermässigem Strecken der Kunststoffbeschichtung 3 auftreten können.

Zudem kann auch der Übergang zwischen den Seitenwänden und dem Rand 7 mit einem Radius versehen sein, der aber oftmals nur zwischen 1 und 5 Millimeter beträgt.

Für die Kunststoffbeschichtung 3 wird hitzebeständiges Kunststoffmaterial eingesetzt, welches Temperaturen von bis zu 250°C verträgt. Für viele Anwendungen gerade im Fertigessen-Bereich reicht es auch, wenn das Kunststoffmaterial bis zu 220°C aushält, ohne zu schmelzen. Damit ist die Schale 1 dann backofentauglich.

Es hat sich als günstig erwiesen, die Kunststoffbeschichtung in einer Menge zwischen 5 und 100 g/m² auf den Karton aufzubringen. Oftmals werden zwischen 40 und 70 g/m² aufgetragen. Gute Ergebnisse wurden mit Auftragsstärken von zirka 60 g/m² erzielt.

Die Menge des Kunststoffmaterials 3 reicht dann auch zum Glätten der Falten 10 aus.

Für die Folienlage können allgemein Polymere, insbesondere PET, PA, PP aber auch biologisch abbaubare und/oder aus nachwachsenden Rohstoffen hergestellte Polymere wie zum Beispiel PLA eingesetzt werden.

Es ist auch denkbar, daß PET als Beschichtungsmaterial eingesetzt wird, welches zunächst in amorpher Form aufgetragen ist und durch die beim Tiefdrücken / Tiefziehen eingesetzte Wärme kristallisiert.

Wird die Kunststoffbeschichtung 3 als Laminat vorgesehen, so weist diese eine Dicke zwischen 5 und 100 Micron auf.

Die Anforderungen an den Deckel 11 sind dagegen nicht so streng. Vielmehr muss der Deckel einen guten Schutz gegenüber mechanischen Belastungen aufweisen.

Dieser Schutz wird vor allem durch den Folien-Papier/Karton-Verbund gewährleistet.

Durch die Kombination der Kunststofflage mit einem Papier bzw. Karton kann einerseits die Dicke der Kunststofflage reduziert werden. Es ist aber auch denkbar, daß auch die Dicke des Kartons bzw. Papieres reduziert werden kann, ohne die Verpackung negativ zu beeinflussen.

Gerade für den Deckel 11 ergibt sich dadurch die Möglichkeit, für diesen anstatt Karton vergleichsweise dünnes Papier zu verwenden, das erheblich leichter zu verarbeiten ist. So kann das Deckelmaterial auf Rollen bereitgestellt werden, was einen erheblichen Vorteil im Hinblick auf die Handhabung bedeutet.

Trotzdem ist der Deckel 11 widerstandsfähig gegenüber Stichverletzungen.

Der Deckel 11 schließt in der Regel mit der Außenkante des Randes 7 ab. Es ist aber denkbar, daß wenigstens ein kleiner Bereich über den Rand 7 übersteht und eine Grifflasche 16 bildet, die ein leichtes Öffnen der Verpackung ermöglicht.

Die gesamte Verpackung besitzt eine steife Struktur und kann nicht geöffnet werden, ohne daß dies sichtbar ist. Zudem ist die Verpackung stabil gegenüber Stich- und Stoßverletzungen und kann einen großen Temperaturbereich zwischen etwa -40°C und über 200°C abdecken, ohne beschädigt zu werden.

Im Vergleich zu herkömmlichen Kunststoff- und Aluminiumschalen weist die erfindungsgemäße Verpackung noch sehr gute Isolationseigenschaften auf.

Selbst wenn für die Kunststoffbeschichtung 3 und den Deckel 11 nicht biologisch abbaubare Kunststoffe eingesetzt werden, ist dies nur ein kleiner Teil der Verpackung. Die Verpackung kann trotzdem problemlos über Papierrecycling entsorgt werden.

Gerade beim Einsatz von Kunststoffen aus nachwachsenden Rohstoffen und/oder biologisch abbaubaren Kunststoffen ist das Recycling der Verpackung sichergestellt.

Durch den Einsatz eines Folien - Papier/Karton -Verbundes für den Deckel 11 wird nicht nur die Stabilität des Deckels verbessert, sondern auch die Anmutung der gesamten Verpackung wird mehr in Richtung recycelbar verschoben.

Um die Kunststoffmaterialien mit dem Papier bzw. Karton zu verbinden wird eine Haftvermittlerlage bzw. Kleberlage vorgesehen, die aber auch als Delaminationshilfe wirken kann.

Es sind verschiedene Ausgestaltungen denkbar.

Einerseits kann eine Verpackung für eine modifizierte Atmosphäre geschaffen werden. Hierzu kann beispielsweise das Papier mit einer PA, PP, PE oder PET Lage beschichtet sein, wobei offen bleiben kann, ob dies als echte Beschichtung, als Laminat oder als Kaschierung aufgebracht ist. Zwischen der Folienlage und der Papierlage kann eine Kleberschicht vorgesehen werden. Diese kann aus wasserbasierendem Kleber auf Vinylbasis, Acrylbasis, Polyamidbasis, Polyesterbasis, Kautschukbasis, Gummibasis, Polyurethanbasis, Stärkebasis, Caseinbasis, Ligninbasis und/oder Polyvinylalkoholbasis, und/oder lösungsmittelbasierendem Kleber auf Vinylbasis, Acrylbasis, Polyamidbasis, Polyesterbasis, Kautschukbasis, Gummibasis, Polyurethanbasis, Nitrocellulosebasis, Zelluloseacetatbasis und/oder Polyisobutylenbasis, und/oder lösungsmittelfreiem Kleber auf Vinylbasis, Acrylbasis, Polyamidbasis, Polyesterbasis, Kautschukbasis, Gummibasis, Polyurethanbasis, Nitrocellulosebasis, Zelluloseacetatbasis und/oder Polyisobutylenbasis, und/oder biologischem Kleber auf Stärkebasis, Dextrinbasis, Ligninbasis, Caseinbasis, Basis natürlichem Kautschuk, Gelatinebasis, Nitrocellulosebasis, Zelluloseacetatbasis und/oder PLA-Basis bestehen.

Es ist auch denkbar, daß der Kleber auf anderen biologisch abbaubaren und/oder aus nachwachsenden Rohstoffen hergestellten Materialien basiert oder aus diesen besteht.

Auch können als Kleberschicht ein Anhydrid modifiziertes Ethylen Acrylat Copolymer, ein Anhydrid modifiziertes Ethylen Vinyl Acetat Copolymer, ein Ethylen Acrylsäure Copolymer und/oder ein Ethylen Vinyl Acetat Copolymer vorgesehen werden.

Diese Kleber ermöglichen es, daß der Verbund zwar gut zusammenhält, aber trotzdem bei Raumtemperatur getrennt werden kann. Hierzu wird die Folienlage von der Papier/Karton-Lage abgezogen.

Es ist aber auch denkbar, daß die Folienschicht direkt als Kaschierung aufgebracht wird, ohne daß Haftvermittler oder Klebstoffe vorgesehen werden.

Mit Klebern aus denselben Gruppen kann auch der Deckel 11 auf das Unterteil aufgeklebt werden. Es ist aber auch möglich, durch die vergleichsweise dünne Papierlage des Deckels 11 hindurch die Folienlage des Unterteils mit der Folienlage des Deckels 11 miteinander zum Beispiel durch Wärme miteinander zu versiegeln.

In beiden Fällen wird eine dichte Verbindung zwischen Unterteil und Deckel 11 geschaffen, so daß die modifizierte Atmosphäre in der Verpackung lange erhalten bleibt und so daß Füllgut gegen Verderben geschützt wird.

Nach Entleeren der Verpackung kann auch die Folienlage von der Papierlage getrennt werden.

Es ist aber auch denkbar, daß eine nicht vollständig dichte Verbindung zwischen Unterteil und Deckel 11 erzeugt wird. Dies bietet sich vor allem zum Verpacken von Tiefkühlkost an, die dann im Unterteil in einem Backofen oder einer Mikrowelle erwärmt wird. Diese nicht vollständig dichte Verbindung kann dann als eine Art Überdruckventil wirken.

Desweiteren ist es denkbar, daß der Deckel erst nach dem Erhitzen der kompletten Verpackung abziehbar ist.

Um diese Möglichkeit zu schaffen, werden Klebstoffe, Haftvermittler, Siegelhilfen oder aber auch Materialkombinationen eingesetzt, die sich bei erhöhten Temperaturen verändern bzw. deren Zusammenhalt sich bei erhöhten Temperaturen verändert. Dadurch wird die Haftkraft reduziert. Erhöhte Temperaturen können bereits ab 50°C vorliegen.

Ebenso kann bei einer solchen Ausgestaltung die Folienlage erst nach dem Erhitzen von der Papierlage getrennt werden.

Denkbar ist es auch, daß Bio-Polymere wie zum Beispiel PLA, aber auch andere aus nachwachsenden Rohstoffen hergestellte und/oder biologisch abbaubare Polymere eingesetzt werden. Diese können aufgrund dieser Ausgestaltungen als Alternative zu PA, PET, PP, PE oder dergleichen eingesetzt werden.

Kombinationen der Ausgestaltungen sind denkbar. So kann beispielsweise auch eine Verpackung hergestellt werden, die trotz einer modifizierten Atmosphäre erst beim oder nach dem Erhitzen geöffnet werden kann.

Das eingesetzte Papier für den Deckel kann geringe Flächengewichte von um die 90 g/m² aufweisen.

Die Kleber- bzw. Haftvermittler- / Delaminationshilfeschicht wird mit Flächengewichten zwischen 1,0 und 5,0 g/m² aufgetragen. Bei lösungsmittelhaltigen Klebern sind Auftragsgewichte zwischen 3,5 und 4,0 g/m², bei wasserbasierenden Klebern sind Auftragsgewichte zwischen 2,0 und 3,5 g/m² und bei lösungsmittelfreien Klebern sind Auftragsgewichte zwischen 1,8 und 2,5 g/m² ausreichend.

Der Einsatz von Hotmelt Klebstoffen mit vergleichbaren Auftragsgewichten ist denkbar.

Die Papierlage kann auch aus Pressfasern bestehen. Ebenso ist der Einsatz von Dispersion Plastics denkbar.

Für eine bei Raumtemperatur trennbare Ausgestaltung ist es denkbar, daß auf eine Papierschicht 41 eine Klebstoffschicht 42 folgt. Die Klebstoffschicht 42 schafft die Verbindung zu einer darauf folgenden PET Schicht 43, die ihrerseits mittels einer weiteren Klebstoffschicht 44 mit einer Copolymerschicht aus PE und Vinyl 45 verbunden ist.

Bei dieser Konstruktion lässt sich das Laminat aus PET Schicht 43, Klebstoffschicht 44 und Copolymerschicht 45 problemlos bei Raumtemperatur von dem Unterteil 1 abziehen. Das Laminat kann im Coextrusionsverfahren hergestellt werden. Es ist auch denkbar, daß sich das Laminat von der Papierschicht 41 abziehen lässt.

An Klebstoffen werden Anhydrid modifiziertes Ethylen Acrylat Copolymer, ein Anhydrid modifiziertes Ethylen Vinyl Acetat Copolymer, ein Ethylen Acrylsäure Copolymer und/oder ein Ethylen Vinyl Acetat Copolymer verwendet.

Um die Trennbarkeit bei Raumtemperatur zu erreichen, wird ein höherer Comonomer Anteil im Klebstoff von 20 bis 40 Prozent vorgesehen.

Eine weitere sehr vorteilhafte Ausgestaltung liegt auch vor, wenn eine Papierschicht 41 vorgesehen ist, auf die eine Klebstoffschicht 42 folgt. Auf diese folgt wiederum eine PET Schicht 43, die diesmal mit einer Beschichtung 46 versehen ist, die Vinyl, zum Beispiel Ethylenvinylacetatmonomere enthalten kann. Diese Beschichtung 46 kann beispielsweise auf die PET Schicht 43 aufgedruckt sein. Es ist denkbar, daß zwischen der PET Schicht 43 und der Beschichtung 46 eine guter Zusammenhalt dadurch erreicht wird, daß die PET Schicht 43 mit einem Primer versehen wird oder mit einer Corona Entladung vorbehandelt wird.

Für einen Aufbau, der erst bei erhöhter Temperatur oder nachdem er einer erhöhten Temperatur ausgesetzt war, trennbar ist, wird ein Papier 61 vorgesehen, auf das eine Klebstoffschicht 62 folgt. Auf dieser Klebstoffschicht 62 ist wieder eine PET Schicht 63 angeordnet, die entweder mit einer Beschichtung 64 versehen ist, oder aber mit einer PE-Vinyl-Schicht 65 ausgerüstet ist. Zwischen der PE-Vinyl-Schicht 65 und der PET Schicht 63 ist wiederum eine Klebstoffschicht 66 angeordnet.

Um die Trennbarkeit erst bei erhöhter Temperatur zu erzielen, ist im Klebstoff ein niedriger Comonomeranteil von 5 bis 20% vorgesehen.

## Patentansprüche

**1.** Verpackung aus einem Papier-, Karton- oder Faser-Unterteil (1) mit ein oder mehreren Abteilen (4) beliebiger Form, wobei die Ecken (9) der Abteile (4) eine abgerundete Form aufweisen und die Abteile (4) von einem Rand (7) wenigstens überwiegend umfasst werden, wobei das Unterteil (1) tiefgedrückt oder tiefgezogen sein kann und eine Kunststoffbeschichtung (3) aufweisen kann, **dadurch gekennzeichnet, daß** das Unterteil (1) mit einem Deckel (11) verschlossen und so die Verpackung gebildet ist und daß der Deckel (11) aus einer Kunststofflage oder einem Papier, Karton oder einer Faserlage gebildet ist, wobei das Papier, der Karton oder die Faserlage mit einer Kunststofflage ausgerüstet ist und daß das Unterteil (1) aus Polymeren, PE, PET, PA, PP, Dispersion Plastics und/oder biologisch abbaubaren und/oder nachwachsenden Stoffen, wie PLA, Papier, Pappe, Pressfasern, Faserguß-, Faserform-Materialien alleine oder in Kombination bestehen oder diese Materialien aufweisen kann und daß das Oberteil (11) aus Polymeren, PE, PET, PA, PP, Dispersion Plastics und/oder biologisch abbaubaren und/oder nachwachsenden Stoffen, wie PLA, Papier, Pappe, Pressfasern, Faserguß-, Faserform-Materialien alleine oder in Kombination bestehen oder diese Materialien aufweisen kann und daß das Unterteil (1) eine Kunststofflage (3) aus Polymeren, PE, PET, PA, PP, Dispersion Plastics und/oder biologisch abbaubaren und/oder aus nachwachsenden Rohstoffen hergestellten Kunststoffen, wie PLA aufweisen oder aus diesen Materialien bestehen kann und daß der Deckel (11) eine Kunststofflage aus Polymeren, PE, PET, PA, PP und/oder biologisch abbaubaren und/oder aus nachwachsenden Rohstoffen hergestellten Kunststoffen, wie PLA aufweisen oder aus diesen Materialien bestehen kann.

**2.** Verpackung nach einem der vorangehenden Ansprüche, **dadurch gekennzeichnet, daß** die Kunststofflage mehrschichtig ausgebildet ist und/oder daß zwischen Kunststoffschicht (43,63,3) und Papier, Karton oder Faserlage (41,61,2) und/oder zwischen Unterteil (1) und Deckel (11) eine Zwischenschicht (42,44,45,46,62,64,65,66) vorgesehen ist, die als Haftvermittler und/oder als Delaminationshilfe ausgestaltet sein kann und/oder daß eine Kleberschicht (42,44,45,46,62,64,65,66) zwischen Kunststoffschicht (43,63,3) und Papier, Karton oder Faserlage (41,61,2) und/oder zwischen Unterteil (1) und Deckel (11) vorgesehen ist, wobei als Kleberschicht ein Kleber auf Wasserbasis, Lösungsmittelbasis, lösungsmittelfreier Basis oder Biobasis vorgesehen sein kann und daß die Kleberschicht als Haftvermittler, Delaminationshilfe und/oder Siegelschicht ausgebildet sein kann.

**3.** Verpackung nach Anspruch 2, **dadurch gekennzeichnet, daß** wasserbasierende Kleber auf Vinylbasis, Acrylbasis, Polyamidbasis, Polyesterbasis, Kautschukbasis, Gummibasis, Polyurethanbasis, Stärkebasis, Caseinbasis, Ligninbasis und/oder Polyvinylalkoholbasis, und/oder lösungsmittelbasierende Kleber auf Vinylbasis, Acrylbasis, Polyamidbasis, Polyesterbasis, Kautschukbasis, Gummibasis, Polyurethanbasis, Nitrocellulosebasis, Zelluloseacetatbasis und/oder Polyisobutylenbasis, und/oder lösungsmittelfreie Kleber auf Vinylbasis, Acrylbasis, Polyamidbasis, Polyesterbasis, Kautschukbasis, Gummibasis, Polyurethanbasis, Nitrocellulosebasis, Zelluloseacetatbasis und/oder Polyisobutylenbasis, und/oder biologische Kleber auf Stärkebasis, Dextrinbasis, Ligninbasis, Caseinbasis, Basis natürlichem Kautschuk, Gelatinebasis, Nitrocellulosebasis, Zelluloseacetatbasis, PLA-Basis und/oder auf Basis anderer nachwachsender und/oder biologisch abbaubarer Stoffe vorgesehen sind und/oder daß als Kleberschicht ein Anhydrid modifiziertes Ethylen Acrylat Copolymer, ein Anhydrid modifiziertes Ethylen Vinyl Acetat Copolymer, ein Ethylen Acrylsäure Copolymer und/oder ein Ethylen Vinyl Acetat Copolymer vorgesehen ist.

**4.** Verpackung nach Anspruch 2 oder 3, **dadurch gekennzeichnet, daß** die Kleber mit einem Flächengewicht zwischen 1,0 und 5,0 g/m² vorgesehen sind, wobei wasserbasierende Kleber mit einem Flächengewicht zwischen 2,0 und 5,0 g/m², insbesondere zwischen 3,0 und 3,5 g/m² und lösungsmittelbasierende Kleber zwischen 2,0 und 5,0 g/m², insbesondere zwischen 3,5 und 4,0 g/m² und lösungsmittelfreie Kleber zwischen 1,0 und 4,0 g/m², insbesondere zwischen 1,8 und 2,5 g/m² vorgesehen sind.

**5.** Verpackung nach einem der vorangehenden Ansprüche, **dadurch gekennzeichnet, daß** der Deckel (11) ein oder mehrere Sichtfenster (12) aufweist und innerhalb dieser Sichtfenster (12) wenigstens weitgehend transparent ausgebildet ist, wobei der Deckel (11) ausserhalb der Sichtfenster (12) opak ausgebildet sein kann und daß der Papier/Karton/Faserteil des Folien - Papier/Karton/Faser - Verbundes im Bereich der Sichtfenster (12) ausgespart sein kann und/oder daß der Deckel (11) wenigstens außerhalb der Sichtfenster mit einer Bedruckung (13,14) ausgerüstet sein kann, wobei die Bedruckung (13,14) ein oder zweiseitig auf dem Papier oder der Kunststofflage vorgesehen sein kann.

**6.** Verpackung nach einem der vorangehenden Ansprüche, **dadurch gekennzeichnet, daß** Falten (10) in den abgerundeten Ecken (9) des Unterteils (1) im Bereich des umlaufenden Randes (7) durch geschmolzenes Material der Kunststoffbeschichtung des Unterteils (1) geglättet sind und/oder daß der Deckel (11) auf das Verpackungsunterteil (1) im Bereich des Randes (7) aufgesiegelt und/oder aufgeklebt ist.

**7.** Verpackung nach einem der vorangehenden Ansprüche, **dadurch gekennzeichnet, daß** zumindest die Kunststoffbeschichtung des Verpackungsuntereils aus einem gegen hohe Temperaturen beständigen Material besteht, wobei die hohen Temperaturen bis zu 250°C, vorzugsweise bis zu 220°C betragen.

**8.** Verpackung nach einem der vorangehenden Ansprüche, **dadurch gekennzeichnet, daß** beim Verpackungsuntereil (1) der Übergang zwischen Rand (7) und Wand (6) und/oder zwischen Wand (6) und Boden (5) durch einen Radius definiert ist, wobei der Radius zwischen fünf und achtzig Millimeter, vorzugsweise zwischen zehn und vierzig Millimeter betragen kann.

**9.** Verpackung nach einem der vorangehenden Ansprüche, **dadurch gekennzeichnet, daß** das Verpackungsunterteil (1) und/oder das Verpackungsoberteil (11) wenigstens teilweise bedruckt ist, wobei die Bedruckung (14) in ebenen Bereichen der Verpackung vorgesehen sein kann.

**10.** Verpackung nach einem der vorangehenden Ansprüche, **dadurch gekennzeichnet, daß** der Deckel (11) mit dem äußeren Rand des Unterteils (1) im wesentlichen abschließt und/oder daß wenigstens ein Teilbereich des Deckels (11) über das Unterteil (1) übersteht und eine Grifflasche (16) bildet und/oder daß eine gasdichte Verbindung zwischen Deckel (11) und Unterteil (1) vorgesehen ist.

**11.** Verpackung nach einem der vorangehenden Ansprüche, **dadurch gekennzeichnet, daß** die Verbindung zwischen Unterteil (1) und Deckel (11) bei Raumtemperatur leicht trennbar ist und/oder die Verbindung zwischen Unterteil (1) und Deckel (11) nach Erhitzen der Verpackung leicht trennbar ist und/oder daß die Kunststofflage des Unterteils (1) und/oder des Deckels (11) von der jeweiligen Kartonlage bei Raumtemperatur leicht trennbar ist, wobei die Kleberschicht einen Comonomer Anteil zwischen zwanzig und vierzig Prozent aufweisen kann und/oder wobei die Kleberschicht eine Dicke zwischen drei und sechs Mikrometer aufweisen kann.

**12.** Verpackung nach einem der vorangehenden Ansprüche, **dadurch gekennzeichnet, daß** die Kunststofflage von der Kartonlage nach Erhitzen der Verpackung leicht trennbar ist, wobei die Kleberschicht einen Comonomer Anteil zwischen fünf und zwanzig Prozent aufweisen kann und/oder wobei die Kleberschicht eine Dicke zwischen ein und vier Mikrometer aufweisen kann.

**13.** Verpackung nach einem der vorangehenden Ansprüche, **dadurch gekennzeichnet, daß** die Kunststofflage Barriereeigenschaften gegenüber Gasen, Sauerstoff, Feuchtigkeit und anderen Medien aufweist. 14. Verwendung einer Verpackung nach einem der vorangehenden Ansprüche, **dadurch gekennzeichnet, daß** die Verpackung zum Verpacken von Gütern unter modifizierter Barriere verwendet wird.

**15.** Verwendung einer Verpackung nach einem der Ansprüche 1 bis 13, **dadurch gekennzeichnet, daß** die Verpackung als Transport und/oder Garverpackung für Lebensmittel verwendet wird.
